# EUROPÄISCHE PATENTANMELDUNG

(11) **EP 3 372 079 A1**
(43) Veröffentlichungstag der Anmeldung: **12.09.2018**
(21) Anmeldenummer: 17159292.6
(22) Anmeldetag: 06.03.2017
(51) Int. Cl.: A01N 25/04, A01N 25/22, A01N 43/88, A01P 3/00, A01P 7/04, A01P 7/02, A01P 5/00, A01P 13/00

(54) **NEUE EMULSIONSKONZENTRATE AUF BASIS VON AGROCHEMISCHEN WIRKSTOFFEN**

(71) Anmelder: Bayer CropScience Aktiengesellschaft, 40789 Monheim am Rhein (DE)
(72) Erfinder: Die Erfindernennung liegt noch nicht vor
(74) Vertreter: BIP Patents

(57) **Zusammenfassung**

Die Erfindung betrifft das technische Gebiet der Formulierungen von Wirkstoffen für die Anwendung im Pflanzenschutz. Speziell betrifft die Erfindung Formulierungen für Wirkstoff-Kombinationen enthaltend Fluoxastrobin sowie ein Esteramid als Lösungsmittel, ein Verfahren zur deren Herstellung sowie die Anwendung als Pflanzenschutzmittel.

## Beschreibung

Die Erfindung betrifft das technische Gebiet der Formulierungen von Wirkstoffen für die Anwendung im Pflanzenschutz. Speziell betrifft die Erfindung Formulierungen für Wirkstoff-Kombinationen enthaltend Fluoxastrobin sowie ein Esteramid als Lösungsmittel, ein Verfahren zur deren Herstellung sowie die Anwendung als Pflanzenschutzmittel.

Pflanzenschutzmittel können prinzipiell auf verschiedene Arten formuliert werden, wobei die Eigenschaften der Wirkstoffe und Art der Formulierung Probleme hinsichtlich Herstellbarkeit, Stabilität, Anwendbarkeit und Wirksamkeit der Formulierungen aufwerfen können. Dies gilt insbesondere für Wirkstoff-Kombinationen, die sich aus unterschiedlichen Wirkstoffgruppen zusammensetzen. Zusätzlich sind bestimmte Formulierungstypen aus ökonomischen und ökologischen Gründen vorteilhafter als andere und daher vorzuziehen.

Die gemeinsame Applikation z.B. von Prothioconazole und Fluoxastrobin als Tankmischung, d.h. Zugabe der Einzelformulierungen von Prothioconazole und Fluoxastrobin in den Spritztank sowie Durchmischung dieser bei gleichzeitiger oder anschließender Verdünnung mit Wasser auf die Anwendungskonzentration vor der Applikation, ist bekannt und wird für die Erprobung im Feld erfolgreich angewendet.

Häufig sind hierfür jedoch bestimmte wirksame Mengenverhältnisse zwischen den einzelnen Wirkstoffgruppen einzuhalten, was in idealer Weise erst durch spezielle Wirkstoff-Kombinations-Formulierungen (synonym: Mischungs-Formulierungen) gewährleistet werden kann. Mischungen mit Wirkstoffen mit einem anderen, nicht kreuzresistenten Wirkmechanismus unterdrücken die Vermehrung und Ausbreitung sich selektionierender resistenter Stämme. Somit können gezielt Selektionsvorgänge unterbrochen werden und das Ziel nach einer wirksamen Krankheitsbekämpfung erfüllt werden.

Daneben besteht generell ein Bedarf an hochkonzentrierten Formulierungen von Wirkstoffen, weil die höhere Konzentration vielerlei Vorteile hat. So wird beispielsweise bei hochkonzentrierten Formulierungen ein geringerer Verpackungsaufwand notwendig als bei niedrigkonzentrierten Formulierungen. Entsprechend reduziert sich der Aufwand für Herstellung, Transport und Lagerung; auch vereinfacht sich z.B. die Zubereitung der in der Landwirtschaft eingesetzten Spritzbrühen durch die kleineren Mengen an beispielsweise Pflanzenschutzmittel, welche gehandhabt werden müssen, wie z.B. beim Abfüll- und Verrühr-Vorgang. Dies gilt auch für höher konzentrierte Mischungs-Formulierungen, worin mehrere Wirkstoffe in jeweils hoher Dosierung kombiniert werden. Ferner erlauben höher konzentrierte Formulierungen eine Reduzierung der ausgebrachten Menge an Formulierhilfsstoffen je Ackerfläche, was die Gefahr einer möglichen Pflanzenschädigung durch solche Formulierhilfsstoffe reduziert.

Allerdings treten bei der kombinierten Anwendung mehrerer Wirkstoffe bzw. Wirkstoffgruppen nicht selten Phänomene der physikalischen, chemischen und biologischen Unverträglichkeit auf, z.B. mangelnde Stabilität innerhalb der Formulierung durch Zersetzung und/oder Veränderung des Aggregatzustands in Folge chemischer bzw. physikalischer Instabilität einzelner oder aller Wirkstoffe, aber auch antagonistische Effekte der Wirkstoffe nach der Anwendung, die die biologische Wirksamkeit senken bzw. ganz aufheben können. Dies gilt insbesondere bei höher konzentrierten Mischungs-Formulierungen, worin die hierin kombinierten Wirkstoffe aufgrund der höheren Konzentration stärker agieren können als in Tankmischungen, wo sie in deutlich niedrigeren Anwendungs- bzw. Applikationskonzentration vorliegen.

Es sind bereits zahlreiche Formulierungen von Pflanzenschutzmitteln bekannt, bei denen in dem emulgierbaren Konzentrat (EC-Formulierung) ein nicht wasserlöslicher Wirkstoff zusammen mit einem wasserlöslichen Lösungsmittel enthalten ist. Als Lösungsmittel für einen Wirkstoff wurden bisher beispielsweise N-Methyl-Pyrrolidon (NMP), Dimethylsulfoxid (DMSO) oder γ-Butyrolacton verwendet.

In der WO-A 2005/002334 werden bereits Emulsionskonzentrate auf Basis von Prothioconazole und Fluoxastrobin beschrieben. Die dort offenbarten Emulsionskonzentrate neigen jedoch zu einer unerwünschten Niederschlagsbildung aufgrund der Bildung eines unlöslichen Komplexes von γ-Butyrolacton mit Fluoxastrobin (1:1). Dieses Solvat aus γ-Butyrolacton und Fluoxastrobin fällt als Feststoffaggregat in dem Emulsionskonzentrat aus. Dieser wasserunlösliche Komplex verhindert eine Anwendung des Pflanzenschutzmittels gemäß der dem Fachmann bekannten Praxis. Demnach wird bei der Zubereitung der Spritzbrühe das Emulsionskonzentrat in die Spritzbrühe überführt, wobei auch das oben beschriebene Solvat als Aggregat in der Spritzbrühe vorliegt. Bei der anschließenden Ausbringung der Spritzbrühe werden diese Solvatpartikel aufgrund ihrer Größe von den Sieben in der Spritzapparatur zurückgehalten und es kommt aufgrund der großen Menge an Solvat zur Verstopfung der Spritzapparatur. Somit ist eine gleichmäßige Ausbringung der Spritzbrühe nicht möglich.

Es bestand daher der Bedarf nach einem neuen Emuslionskonzentrat basierend auf einer Mischung aus Fluoxastrobin und einem weiteren Pflanzenschutzmittelwirkstoff, wie zum Beispiel Prothioconazole, welches die oben geschilderten Nachteile nicht aufweist und eine einfache und störungsfreie Applikation der Formulierung mit einer Spritzapparatur ermöglicht.

Grundsätzlich werden bei Mischungs-Formulierungen von Wirkstoffen eine hohe Formulierungsstabilität und gleichzeitig eine möglichst gute biologische Wirkung angestrebt. Daher bestand nach wie vor Bedarf an einer lagerstabilen Formulierung auf Basis von Fluoxastrobin, die keine Solvat-Bildung zeigt und trotzdem eine ausgezeichnete biologische Wirksamkeit aufweist.

Es bestand nun die Aufgabe, spezielle hochkonzentrierte Wirkstoff-Kombinations-Formulierungen (synonym: Mischungs-Formulierungen) für Wirkstoff-Kombinationen enthaltend Fluoxastrobin, insbesondere für die Mischung Fluoxastrobin und Prothioconazole, zur Verfügung zu stellen, die bei sehr guter biologischer Wirkung gleichzeitig über eine deutlich verbesserte Stabilität der MischungsKomponenten in der Formulierung verfügen und keine Solvat-Bildung aufweisen.

Überraschenderweise wurde gefunden, dass diese Aufgabe durch Einsatz spezieller Esteramide als Lösungsmittels in den erfindungsgemäßen Emulsionskonzentrate (Formulierungscode: EC) gelöst wird.

Gegenstand der vorliegenden Erfindung sind Emulsionskonzentrate enthaltend Fluoxastrobin sowie ein oder mehrere agrochemischer Wirkstoffe, dadurch gekennzeichnet, dass diese als Lösungsmittel Verbindungen der Formel (I) 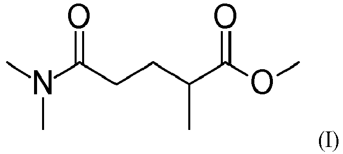 enthalten.

Bevorzugt sind erfindungsgemäße Emulsionskonzentrate die mindestens einen Emulgator aus der Gruppe der Ethylendiaminalkoxylat-Derivate enthalten.

In einer bevorzugten Ausführungsform enthalten die erfindungsgemäßen Emulsionskonzentrate folgende Komponenten:
(a) Fluoxastrobin,
(b) mindestens ein weiterer agrochemischen Wirkstoff,
(c) mindestens ein nicht-ionisches Tensid,
(d) mindestens ein Penetrationsförderer,
(e) mindestens einen Ethylendiaminalkoxylat-Derivat-Emulgator sowie
(f) Methyl-5-(dimethylamino)-2-methyl-5-oxopentanoate (CAS Nummer 1174627-68-9).

Bevorzugt enthalten die erfindungsgemäßen Emulsionskonzentrate mindestens 80 g/L, besonders bevorzugt 100 g/L an Komponente (a).

Dabei versteht man unter einem Emulsionskonzentrat üblicherweise eine Zusammensetzung, die beim Mischen mit Wasser eine Öl-in-Wasser Emulsion bildet. Die Emulsion wird üblicherweise spontan gebildet. Das Konzentrat liegt bevorzugt als homogene Lösung vor. Üblicherweise ist es praktisch frei von dispergierten Teilchen.

Weitere Gegenstände der vorliegenden Erfindung sind die Verwendung der erfindungsgemäßen Formulierungen zur Behandlung von Pflanzen sowie entsprechende Verfahren.

Fluoxastrobin (a) ist eine bekannte fungizide Verbindung. Der chemische Name ist (1E)-[2-[[6-(2-chlorophenoxy)-5-fluoro-4-pyrimidinyl]oxy]phenyl](5,6-dihydro-1,4,2-dioxazin-3-yl)-methanone-O-methyloxime (CAS-Nummer 361377-29-9) (Referenz: DE-A-196 02 095) und der Formel (I)

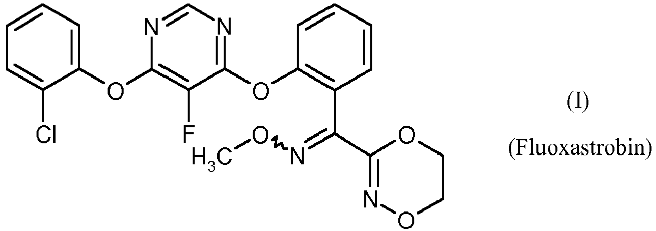

Der Anteil der Komponente (a) in den erfindungsgemäßen Emulsionskonzentraten beträgt 3 bis 20 Gew.-%, bevorzug 4 bis 15 Gew.-%, besonders bevorzug 8 bis 12 Gew.-%.

Bei der Komponente (b) handelt es sich um agrochemische Wirkstoffe beispielsweise
1) Inhibitoren der Ergosterol-Biosynthese:
   (1.001) Cyproconazol, (1.002) Difenoconazol, (1.003) Epoxiconazol, (1.004) Fenhexamid, (1.005) Fenpropidin, (1.006) Fenpropimorph, (1.007) Fenpyrazamin, (1.008) Fluquinconazol, (1.009) Flutriafol, (1.010) Imazalil, (1.011) Imazalil Sulfat, (1.012) Ipconazol, (1.013) Metconazol, (1.014) Myclobutanil, (1.015) Paclobutrazol, (1.016) Prochloraz, (1.017) Propiconazol, (1.018) Prothioconazol, (1.019) Pyrisoxazol, (1.020) Spiroxamin, (1.021) Tebuconazol, (1.022) Tetraconazol, (1.023) Triadimenol, (1.024) Tridemorph, (1.025) Triticonazol, (1.026) (1R,2S,5S)-5-(4-Chlorbenzyl)-2-(chlormethyl)-2-methyl-1-(1H-1,2,4-triazol-1-ylmethyl)cyclopentanol, (1.027) (1S,2R,5R)-5-(4-Chlorbenzyl)-2-(chlormethyl)-2-methyl-1-(1H-1,2,4-triazol-1-ylmethyl)cyclopentanol, (1.028) (2R)-2-(1-Chlorcyclopropyl)-4-[(1R)-2,2-dichlorcyclopropyl]-1-(1H-1,2,4-triazol-1-yl)butan-2-ol (1.029) (2R)-2-(1-Chlorcyclopropyl)-4-[(1S)-2,2-dichlorcyclopropyl]-1-(1H-1,2,4-triazol-1-yl)butan-2-ol, (1.030) (2R)-2-[4-(4-Chlorphenoxy)-2-(trifluormethyl)phenyl]-1-(1H-1,2,4-triazol-1-yl)propan-2-ol, (1.031) (2S)-2-(1-Chlorcyclopropyl)-4-[(1R)-2,2-dichlorcyclopropyl]-1-(1H-1,2,4-triazol-1-yl)butan-2-ol, (1.032) (2S)-2-(1-Chlorcyclopropyl)-4-[(1S)-2,2-dichlorcyclopropyl]-1-(1H-1,2,4-triazol-1-yl)butan-2-ol, (1.033) (2S)-2-[4-(4-Chlorphenoxy)-2-(trifluormethyl)phenyl]-1-(1H-1,2,4-triazol-1-yl)propan-2-ol, (1.034) (R)-[3-(4-Chlor-2-fluorphenyl)-5-(2,4-difluorphenyl)-1,2-oxazol-4-yl](pyridin-3-yl)methanol, (1.035) (S)-[3-(4-Chlor-2-fluorphenyl)-5-(2,4-difluorphenyl)-1,2-oxazol-4-yl](pyridin-3-yl)methanol, (1.036) [3-(4-Chlor-2-fluorphenyl)-5-(2,4-difluorphenyl)-1,2-oxazol-4-yl](pyridin-3-yl)methanol, (1.037) 1-({(2R,4S)-2-[2-Chlor-4-(4-chlorphenoxy)phenyl]-4-methyl-1,3-dioxolan-2-yl}methyl)-1H-1,2,4-triazol, (1.038) 1-({(2S,4S)-2-[2-Chlor-4-(4-chlorphenoxy)phenyl]-4-methyl-1,3-dioxolan-2-yl}methyl)-1H-1,2,4-triazol, (1.039) 1-{[3-(2-Chlorphenyl)-2-(2,4-difluorphenyl)oxiran-2-yl]methyl}-1H-1,2,4-triazol-5-yl-thiocyanat, (1.040) 1-{[rel(2R,3R)-3-(2-Chlorphenyl)-2-(2,4-difluorphenyl)oxiran-2-yl]methyl}-1H-1,2,4-triazol-5-yl-thiocyanat, (1.041) 1-{[rel(2R,3S)-3-(2-Chlorphenyl)-2-(2,4-difluorphenyl)oxiran-2-yl]methyl}-1H-1,2,4-triazol-5-yl-thiocyanat, (1.042) 2-[(2R,4R,5R)-1-(2,4-Dichlorphenyl)-5-hydroxy-2,6,6-trimethylheptan-4-yl]-2,4-dihydro-3H-1,2,4-triazol-3-thion, (1.043) 2-[(2R,4R,5S)-1-(2,4-Dichlorphenyl)-5-hydroxy-2,6,6-trimethylheptan-4-yl]-2,4-dihydro-3H-1,2,4-triazol-3-thion, (1.044) 2-[(2R,4S,5R)-1-(2,4-Dichlorophenyl)-5-hydroxy-2,6,6-trimethylheptan-4-yl]-2,4-dihydro-3H-1,2,4-triazol-3-thion, (1.045) 2-[(2R,4S,5S)-1-(2,4-Dichlorphenyl)-5-hydroxy-2,6,6-trimethylheptan-4-yl]-2,4-dihydro-3H-1,2,4-triazol-3-thion, (1.046) 2-[(2S,4R,5R)-1-(2,4-Dichlorphenyl)-5-hydroxy-2,6,6-trimethylheptan-4-yl]-2,4-dihydro-3H-1,2,4-triazol-3-thion, (1.047) 2-[(2S,4R,5S)-1-(2,4-Dichlorphenyl)-5-hydroxy-2,6,6-trimethylheptan-4-yl]-2,4-dihydro-3H-1,2,4-triazol-3-thion, (1.048) 2-[(2S,4S,5R)-1-(2,4-Dichlorphenyl)-5-hydroxy-2,6,6-trimethylheptan-4-yl]-2,4-dihydro-3H-1,2,4-triazol-3-thion, (1.049) 2-[(2S,4S,5S)-1-(2,4-Dichlorphenyl)-5-hydroxy-2,6,6-trimethylheptan-4-yl]-2,4-dihydro-3H-1,2,4-triazol-3-thion, (1.050) 2-[1-(2,4-Dichlorphenyl)-5-hydroxy-2,6,6-trimethylheptan-4-yl]-2,4-dihydro-3H-1,2,4-triazol-3-thion, (1.051) 2-[2-Chlor-4-(2,4-dichlorophenoxy)phenyl]-1-(1H-1,2,4-triazol-1-yl)propan-2-ol, (1.052) 2-[2-Chlor-4-(4-chlorphenoxy)phenyl]-1-(1H-1,2,4-triazol-1-yl)butan-2-ol, (1.053) 2-[4-(4-Chlorphenoxy)-2-(trifluormethyl)phenyl]-1-(1H-1,2,4-triazol-1-yl)butan-2-ol, (1.054) 2-[4-(4-Chlorphenoxy)-2-(trifluormethyl)phenyl]-1-(1H-1,2,4-triazol-1-yl)pentan-2-ol, (1.055) 2-[4-(4-Chlorphenoxy)-2-(trifluormethyl)phenyl]-1-(1H-1,2,4-triazol-1-yl)propan-2-ol, (1.056) 2-{[3-(2-Chlorphenyl)-2-(2,4-difluorphenyl)oxiran-2-yl]methyl}-2,4-dihydro-3H-1,2,4-triazol-3-thion, (1.057) 2-{[rel(2R,3R)-3-(2-Chlorphenyl)-2-(2,4-difluorphenyl)oxiran-2-yl]methyl}-2,4-dihydro-3H-1,2,4-triazol-3-thion, (1.058) 2-{[rel(2R,3S)-3-(2-Chlorphenyl)-2-(2,4-difluorphenyl)oxiran-2-yl]methyl}-2,4-dihydro-3H-1,2,4-triazol-3-thion, (1.059) 5-(4-Chlorbenzyl)-2-(chlormethyl)-2-methyl-1-(1H-1,2,4-triazol-1-ylmethyl)cyclopentanol, (1.060) 5-(Allylsulfanyl)-1-{[3-(2-chlorphenyl)-2-(2,4-difluorphenyl)oxiran-2-yl]methyl}-1H-1,2,4-triazol, (1.061) 5-(Allylsulfanyl)-1-{[rel(2R,3R)-3-(2-chlorphenyl)-2-(2,4-difluorphenyl)oxiran-2-yl]methyl}-1H-1,2,4-triazol, (1.062) 5-(Allylsulfanyl)-1-{[rel(2R,3S)-3-(2-chlorphenyl)-2-(2,4-difluorphenyl)oxiran-2-yl]methyl}-1H-1,2,4-triazol, (1.063) N'-(2,5-Dimethyl-4-{[3-(1,1,2,2-tetrafluorethoxy)phenyl]sulfanyl}phenyl)-N-ethyl-N-methylimidoformamid, (1.064) N'-(2,5-Dimethyl-4-{[3-(2,2,2-trifluorethoxy)phenyl]sulfanyl}phenyl)-N-ethyl-N-methylimidoformamid, (1.065) N'-(2,5-Dimethyl-4-{[3-(2,2,3,3-tetrafluorpropoxy)phenyl]sulfanyl}phenyl)-N-ethyl-N-methylimidoformamid, (1.066) N'-(2,5-Dimethyl-4- {[3-(pentafluorethoxy)phenyl]sulfanyl}phenyl)-N-ethyl-N-methylimidoformamid, (1.067) N'-(2,5-Dimethyl-4-{3-[(1,1,2,2-tetrafluorethyl)sulfanyl]phenoxy}phenyl)-N-ethyl-N-methylimidoformamid, (1.068) N'-(2,5-Dimethyl-4- {3-[(2,2,2-trifluorethyl)sulfanyl]phenoxy}phenyl)-N-ethyl-N-methylimidoformamid, (1.069) N'-(2,5-Dimethyl-4-{3-[(2,2,3,3-tetrafluorpropyl)sulfanyl]phenoxy}phenyl)-N-ethyl-N-methylimidoformamid, (1.070) N'-(2,5-Dimethyl-4-{3-[(pentafluorethyl)sulfanyl]phenoxy}phenyl)-N-ethyl-N-methylimidoformamid, (1.071) N'-(2,5-Dimethyl-4-phenoxyphenyl)-N-ethyl-N-methylimidoformamid, (1.072) N'-(4-{[3-(Difluormethoxy)phenyl]sulfanyl}-2,5-dimethylphenyl)-N-ethyl-N-methylimidoformamid, (1.073) N'-(4-{3-[(Difluormethyl)sulfanyl]phenoxy}-2,5-dimethylphenyl)-N-ethyl-N-methylimidoformamid, (1.074) N'-[5-Brom-6-(2,3-dihydro-1H-inden-2-yloxy)-2-methylpyridin-3-yl]-N-ethyl-N-methylimidoformamid, (1.075) N'-{4-[(4,5-Dichlor-1,3-thiazol-2-yl)oxy]-2,5-dimethylphenyl}-N-ethyl-N-methylimidoformamid, (1.076) N'-{5-Brom-6-[(1R)-1-(3,5-difluorophenyl)ethoxy]-2-methylpyridin-3-yl}-N-ethyl-N-methylimidoformamid, (1.077) N'-{5-Brom-6-[(1S)-1-(3,5-difluorphenyl)ethoxy]-2-methylpyridin-3-yl}-N-ethyl-N-methylimidoformamid, (1.078) N'-{5-Brom-6-[(cis-4-isopropylcyclohexyl)oxy]-2-methylpyridin-3-yl}-N-ethyl-N-methylimidoformamid, (1.079) N'-{5-Brom-6-[(trans-4-isopropylcyclohexyl)oxy]-2-methylpyridin-3-yl}-N-ethyl-N-methylimidoformamid, (1.080) N'-{5-Bromo-6-[1-(3,5-difluorphenyl)ethoxy]-2-methylpyridin-3-yl}-N-ethyl-N-methylimidoformamid, (1.081) Mefentrifluconazole, (1.082) Ipfentrifluconazole.
2) Inhibitoren der Atmungskette am Komplex I oder II :
   (2.001) Benzovindiflupyr, (2.002) Bixafen, (2.003) Boscalid, (2.004) Carboxin, (2.005) Fluopyram, (2.006) Flutolanil, (2.007) Fluxapyroxad, (2.008) Furametpyr, (2.009) Isofetamid, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des anti-epimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS), (2.017) Penflufen, (2.018) Penthiopyrad, (2.019) Pydiflumetofen, (2.020) Pyraziflumid, (2.021) Sedaxane, (2.022) 1,3-Dimethyl-N-(1,1,3-trimethyl-2,3-dihydro-1H-inden-4-yl)-1H-pyrazol-4-carboxamid, (2.023) 1,3-Dimethyl-N-[(3R)-1,1,3-trimethyl-2,3-dihydro-1H-inden-4-yl]-1H-pyrazol-4-carboxamid, (2.024) 1,3-Dimethyl-N-[(3S)-1,1,3-trimethyl-2,3-dihydro-1H-inden-4-yl]-1H-pyrazol-4-carboxamid, (2.025) 1-Methyl-3-(trifluormethyl)-N-[2'-(trifluormethyl)biphenyl-2-yl]-1H-pyrazol-4-carboxamid, (2.026) 2-Fluor-6-(trifluoromethyl)-N-(1,1,3-trimethyl-2,3-dihydro-1H-inden-4-yl)benzamid, (2.027) 3-(Difluormethyl)-1-methyl-N-(1,1,3-trimethyl-2,3-dihydro-1H-inden-4-yl)-1H-pyrazol-4-carboxamid, (2.028) 3-(Difluormethyl)-1-methyl-N-[(3R)-1,1,3-trimethyl-2,3-dihydro-1H-inden-4-yl]-1H-pyrazol-4-carboxamid, (2.029) 3-(Difluormethyl)-1-methyl-N-[(3S)-1,1,3-trimethyl-2,3-dihydro-1H-inden-4-yl]-1H-pyrazol-4-carboxamid, (2.030) 3-(Difluormethyl)-N-(7-fluor-1,1,3-trimethyl-2,3-dihydro-1H-inden-4-yl)-1-methyl-1H-pyrazol-4-carboxamid, (2.031) 3-(Difluormethyl)-N-[(3R)-7-fluor-1,1,3-trimethyl-2,3-dihydro-1H-inden-4-yl]-1-methyl-1H-pyrazol-4-carboxamid, (2.032) 3-(Difluoromethyl)-N-[(3S)-7-fluor-1,1,3-trimethyl-2,3-dihydro-1H-inden-4-yl]-1-methyl-1 H-pyrazol-4-carboxamid, (2.033) 5,8-Difluor-N-[2-(2-fluor-4-{[4-(trifluormethyl)pyridin-2-yl]oxy}phenyl)ethyl]quinazolin-4-amin, (2.034) N-(2-Cyclopentyl-5-fluorbenzyl)-N-cyclopropyl-3-(difluormethyl)-5-fluor-1-methyl-1H-pyrazol-4-carboxamid, (2.035) N-(2-tert-Butyl-5-methylbenzyl)-N-cyclopropyl-3-(difluormethyl)-5-fluor-1-methyl-1H-pyrazol-4-carboxamid, (2.036) N-(2-tert-Butylbenzyl)-N-cyclopropyl-3-(difluormethyl)-5-fluor-1-methyl-1H-pyrazol-4-carboxamid, (2.037) N-(5-Chlor-2-ethylbenzyl)-N-cyclopropyl-3-(difluormethyl)-5-fluor-1-methyl-1 H-pyrazol-4-carboxamid, (2.038) N-(5-Chlor-2-isopropylbenzyl)-N-cyclopropyl-3-(difluormethyl)-5-fluor-1-methyl-1H-pyrazol-4-carboxamid, (2.039) N-[(1R,4S)-9-(Dichlormethylen)-1,2,3,4-tetrahydro-1,4-methanonaphthalen-5-yl]-3-(difluormethyl)-1-methyl-1H-pyrazol-4-carboxamid, (2.040) N-[(1S,4R)-9-(Dichlormethylen)-1,2,3,4-tetrahydro-1,4-methanonaphthalen-5-yl]-3-(difluormethyl)-1-methyl-1H-pyrazol-4-carboxamid, (2.041) N-[1-(2,4-Dichlorphenyl)-1-methoxypropan-2-yl]-3-(difluormethyl)-1-methyl-1H-pyrazol-4-carboxamid, (2.042) N-[2-Chlor-6-(trifluormethyl)benzyl]-N-cyclopropyl-3-(difluormethyl)-5-fluor-1-methyl-1H-pyrazol-4-carboxamid, (2.043) N-[3-Chlor-2-fluor-6-(trifluormethyl)benzyl]-N-cyclopropyl-3-(difluormethyl)-5-fluor-1-methyl-1H-pyrazol-4-carboxamid, (2.044) N-[5-Chlor-2-(trifluormethyl)benzyl]-N-cyclopropyl-3-(difluormethyl)-5-fluor-1-methyl-1H-pyrazol-4-carboxamid, (2.045) N-Cyclopropyl-3-(difluormethyl)-5-fluor-1-methyl-N-[5-methyl-2-(trifluormethyl)benzyl]-1H-pyrazol-4-carboxamid, (2.046) N-Cyclopropyl-3-(difluormethyl)-5-fluor-N-(2-fluor-6-isopropylbenzyl)-1-methyl-1H-pyrazol-4-carboxamid, (2.047) N-Cyclopropyl-3-(difluormethyl)-5-fluor-N-(2-isopropyl-5-methylbenzyl)-1-methyl-1H-pyrazol-4-carboxamid, (2.048) N-Cyclopropyl-3-(difluormethyl)-5-fluor-N-(2-isopropylbenzyl)-1-methyl-1H-pyrazol-4-carbothioamid, (2.049) N-Cyclopropyl-3-(difluoromethyl)-5-fluor-N-(2-isopropylbenzyl)-1-methyl-1H-pyrazol-4-carboxamid, (2.050) N-Cyclopropyl-3-(difluormethyl)-5-fluor-N-(5-fluor-2-isopropylbenzyl)-1-methyl-1H-pyrazol-4-carboxamid, (2.051) N-Cyclopropyl-3-(difluormethyl)-N-(2-ethyl-4,5-dimethylbenzyl)-5-fluor-1-methyl-1H-pyrazol-4-carboxamid, (2.052) N-Cyclopropyl-3-(difluormethyl)-N-(2-ethyl-5-fluorbenzyl)-5-fluor-1-methyl-1H-pyrazol-4-carboxamid, (2.053) N-Cyclopropyl-3-(difluormethyl)-N-(2-ethyl-5-methylbenzyl)-5-fluor-1-methyl-1H-pyrazole-4-carboxamid, (2.054) N-Cyclopropyl-N-(2-cyclopropyl-5-fluorbenzyl)-3-(difluormethyl)-5-fluor-1-methyl-1H-pyrazole-4-carboxamid, (2.055) N-Cyclopropyl-N-(2-cyclopropyl-5-methylbenzyl)-3-(difluormethyl)-5-fluor-1-methyl-1H-pyrazole-4-carboxamid, (2.056) N-Cyclopropyl-N-(2-cyclopropylbenzyl)-3-(difluormethyl)-5-fluor-1-methyl-1H-pyrazole-4-carboxamid.

Bevorzugte fungizide Wirkstoffe (b) sind (1.021) Tebuconazole, (1.003) Epoxiconazole, (1.013) Metconazole, (1.022) Tetraconazole, (1.002) Difenoconazole, (1.017) Propiconazole, (1.001) Cyproconazole, (1.018) Prothioconazole, (2.001) Benzovindiflupyr, (2.002) Bixafen, (2.003) Boscalid, (2.005) Fluopyram, (2.007) Fluxapyroxad, (2.010) Isopyrazam (anti-epimeres Enantiomer 1R,4S,9S), (2.011) Isopyrazam (anti-epimeres Enantiomer 1S,4R,9R), (2.012) Isopyrazam (anti-epimeres Racemat 1RS,4SR,9SR), (2.013) Isopyrazam (Mischung des syn-epimeren Razemates 1RS,4SR,9RS und des anti-epimeren Razemates 1RS,4SR,9SR), (2.014) Isopyrazam (syn-epimeres Enantiomer 1R,4S,9R), (2.015) Isopyrazam (syn-epimeres Enantiomer 1S,4R,9S), (2.016) Isopyrazam (syn-epimeres Racemat 1RS,4SR,9RS)" (2.017) Penflufen, (2.018) Penthiopyrad, (2.019) Pydiflumetofen, (2.021) Sedaxane, (2.038) N-(5-Chlor-2-isopropylbenzyl)-N-cyclopropyl-3-(difluormethyl)-5-fluor-1-methyl-1H-pyrazol-4-carboxamid. Besonders bevorzugt sind (1.018) Prothioconazole, (2.002) Bixafen und (2.005) Fluopyram. Ganz besonders bevorzugt ist (1.018) Prothioconazole.

Der Anteil der Komponente (b) in den erfindungsgemäßen Emulsionskonzentraten beträgt 3 bis 25 Gew.-%, bevorzugt 4 bis 20 Gew.-%, besonders bevorzugt 7 bis 15 Gew.-%.

Als nichtionische Emulgatoren (c) kommen übliche, in Formulierungen von agrochemischen Wirkstoffen vorhandene oberflächenaktive Substanzen in Frage.

Beispielhaft genannte Verbindungen (c) sind ethoxylierte Nonylphenole, Polyethylenglykolether von linearen Alkoholen, Endgruppen-verschlossene und nicht Endgruppen-verschlossene alkoxylierte lineare und verzweigte, gesättigte und ungesättigte Alkohole, Umsetzungsprodukte von Alkylphenolen mit Ethylenoxid und/oder Propylenoxid, Ethylenoxid- Propylenoxid-Blockcopolymere, Polyethylenglykole und Polypropylenglykole, weiterhin Fettsäureester, Fettsäurepolyglykoletherester, Alkylsulfonate, Alkylsulfate, Arylsulfate, ethoxylierte Arylalkylphenole, wie zum Beispiel Tristyryl-phenol-ethoxylat mit durchschnittlich 16 Ethylenoxid-Einheiten pro Molekül, weiterhin ethoxylierte und propoxylierte Arylalkylphenole sowie sulfatierte oder phosphatierte Arylalkylphenol-ethoxylate bzw. -ethoxy- und - propoxylate. Besonders bevorzugt sind Tristryl-phenol-alkoxylate und Fettsäurepolyglykoletherester. Ganz besonders bevorzugt sind Tristyryl-phenol-ethoxylate, Tristyryl-phenol-ethoxy-propoxylate und Ricinusölpolyglykoletherestern, jeweils einzeln oder in Mischungen. Hinzu kommen gegebenenfalls Additive, wie Tenside oder Ester von Fettsäuren, die zur Verbesserung der biologischen Wirksamkeit beitragen. Geeignete nichtionische Emulgatoren c19 sind beispielsweise Soprophor^{®} 796/P, Lucramul^{®} CO30, Lucramul^{®} PSI 100 oder Synperonic^{®} T304.

**Tabelle 1: Beispielhafte Handelsnamen und CAS-Nummern bevorzugter Emulgatoren c)**

| **Handelsname** | **Firma** | **Allgemeine Beschreibung** | **CAS**-**Nr**. |
|---|---|---|---|
| Berol^{®} 827 | Akzo Nobel | Ricinusölethoxylat (25EO) | 26264-06-2 |
| Berol^{®} 828 | Akzo Nobel | Ricinusölethoxylat (15EO) | 26264-06-2 |
| Berol^{®} 829 | Akzo Nobel | Ricinusölethoxylat (20EO) | 26264-06-2 |
| Berol^{®} 192 | Akzo Nobel | Ricinusölethoxylat (12EO) | 26264-06-2 |
| Alkamuls^{®} A | Solvay | Ölsäure, ethoxyliert | 9004-96-0 |
| Arlatone^{®} T | Croda | ethoxyliertes Sorbitolheptaoleat (40EO) | 54846-79-6 |
| Emulsogen^{®} EL-400 | Clariant | Ricinusölethoxylat (40EO) | 61791-12-6 |
| Crovol^{®} CR70G | Croda | Fette und glyceridische Öle, | 70377-91-2 |
| | | pflanzlich, ethoxyliert | |
| Agnique^{®} PG8107 | BASF | Oligomere D-Glucopyranosedecyl-octylglycoside | 68515-73-1 |
| Soprophor^{®} 790/P | Solvay | Tristyryl-phenol-ethoxy-propoxylate | 70880-56-7 |
| Lucramul^{®} PS16 | Levaco | Tristyryl-phenol-ethoxylat (16EO) | 104376-75-2 |
| Tween^{®} 80 | Croda | Sorbitanmonooleat, ethoxyliert (20EO) | 9005-65-6 |
| Tween^{®} 85 | Croda | Sorbitantrioleat, ethoxyliert (20EO) | 9005-70-3 |
| Tween^{®} 20 | Croda | Sorbitanmonolaurat, ethoxyliert (20EO) | 9005-64-5 |

Der Anteil der Komponente (c) in den erfindungsgemäßen Emulsionskonzentraten kann 2 bis 45 Gew.-%, bevorzugt 3 bis 40 Gew.-%, besonders bevorzugt 4 bis 25. Gew.-% betragen.

Der Anteil der Komponente (c) kann sich aus verschiedenen Tensiden der genannten Klasse zusammensetzen.

In einer bevorzugten Ausführungsform werden bis zu zwei verschiedene nicht-ionische Tenside, im Folgenden als Komponente (c1) und Komponente (c2) bezeichnet, verwendet.

Bei Komponente (c1) handelt es sich um nicht-ionische Tenside aus der Gruppe der Tristyryl-phenol-ethoxy-propoxylate, jeweils einzeln oder in Mischungen. Bevorzugt sind Tristyryl-phenol-ethoxy propoxylate, ganz besonders bevorzugt Tristyryl-phenol-ethoxy propoxylate mit 16 bis 30 EO und 2 bis 8 PO.

Der Anteil der Komponente (c1) in den erfindungsgemäßen Emulsionskonzentraten kann 3 bis 25 Gew.-%, bevorzugt 4 bis 20 Gew.-%, besonders bevorzugt 5 bis 15 Gew.-% betragen.

Ein besonders bevorzugtes nicht-ionisches Tensid der Komponente (c1) ist Soprophor^{®} 796/P (CAS-Nummer 70880-56-7).

Bei Komponente (c2) handelt es sich um nicht-ionische Tenside aus der Gruppe der Tristyryl-phenol-ethoxylate und Ricinusölpolyglykoletherestern, jeweils einzeln oder in Mischungen. Bevorzugt sind Tristyryl-phenol-ethoxylate, ganz besonders bevorzugt Tristyryl-phenol-ethoxylate mit 10 bis 30 EO.

Der Anteil der Komponente (c2) in den erfindungsgemäßen Emulsionskonzentraten kann 2 bis 20 Gew.-%, bevorzugt 3 bis 15 Gew.-%, besonders bevorzugt 4 bis 11 Gew.-% betragen.

Ein besonders bevorzugtes nicht-ionisches Tensid der Komponente (c2) ist ist das Tristyryl-phenol-ethoxylate Lucramul^{®} PS16 (CAS-Nummer 104376-75-2).

Als Penetrationsförderer (d) geeignet sind beispielsweise
- ethoxylierte verzweigte Alkohole (z.B. Genapol^{®} Typ X) mit 2-20 EO-Einheiten;
- ethoxylierte verzweigte Alkohole mit endständigem Methyl (z.B. Genapol^{®} Typ XM) mit 2-20 EO-Einheiten;
- ethoxylierte Kokosnussalkohole (z.B. Genapol^{®} C-Typen) mit 2-20 EO-Einheiten;
- ethoxylierte C12/15-Alkohole (z.B. Synperonic^{®} A-Typen) mit 2-20 EO-Einheiten;
- propoxy-ethoxylierte Alkohole, verzweigt oder linear, z.B. Antarox^{®} B/848, Atlas^{®} G5000, Lucramul^{®} HOT 5902.

**Tabelle 2: Beispielhafte Handelsnamen und CAS-Nummern bevorzugter Verbindungen (d)**

| **Handelsname** | **Firma** | **Allgemeine Beschreibung** | **CAS- Nr.** |
|---|---|---|---|
| Lucramul^{®} HOT 5902 | Levaco | Alkoholethoxylat-propoxylat (C8-PO8/EO6) | 64366-70-7 |
| Genapol^{®} X060 | Clariant | Alkoholethoxylat (iso-C13-EO6) | 9043-30-5 |
| Genapol^{®} XM 060 | Clariant | Alkoholethoxylat (iso-C13-EO6/mit Me-Endgruppe) | 345642-79-7 |
| Antarox^{®} B/848 | Solvay | Oxiran, Methyl-, Polymer mit Oxiran, Monobutylether | 9038-95-3 |
| Atlas^{®} G5000 | Croda | Oxiran, Methyl-, Polymer mit Oxiran, Monobutylether | 9038-95-3 |

Bevorzugt ist die Verwendung propoxy-ethoxylierte Alkohole als Penetrationsförderer (d). Besonders bevorzugt ist die Verwendung von Alkanol-Alkoxylaten wie Lucramul^{®} HOT 5902 (CAS 64366-70-7).

Der Anteil der Komponente (d) in den erfindungsgemäßen Emulsionskonzentraten kann 2 bis 25 Gew.-%, bevorzugt 5 bis 20 Gew.-%, besonders bevorzugt 8 bis 16 Gew.-% betragen.

Geeignete Ethylendiaminalkoxylat-Derivat-Emulgatoren (e) sind beispielsweise Ethylenoxid/propylenoxid Copolymere basierend auf Ethylendiamin wie beispielsweise Synperonic^{®} T/304 der Firma Croda (CAS 26316-40-5). Bevorzugt werden als Komponente (e) Ethylenoxid/Propylenoxid-Copolymere basierend auf Ethylendiamin mit der CAS-Nr. 26316-40-5 eingesetzt.

Der Anteil der Komponente (e) in den erfindungsgemäßen Emulsionskonzentraten kann 2 bis 20 Gew.-%, bevorzugt 3 bis 15 Gew.-%, besonders bevorzugt 4 bis 12 Gew.-% betragen.

Die Komponente (f) Methyl-5-(dimethylamino)-2-methyl-5-oxopentanoate (CAS-Nummer 1174627-68-9) wird unter dem Handelsnamen Rhodiasolv^{®} Polarclean der Firma Solvay vertrieben. Alternativ wird dieses Lösungsmittel unter dem Handelsnamen Promoclean^{®} TP183 von der Firma Inventec vertrieben.

Der Anteil der Komponente (f) in den erfindungsgemäßen Emulsionskonzentraten kann 5 bis 70 Gew.-%, bevorzugt 10-60Gew.-%, besonders bevorzugt 20-5 Gew.-% betragen.

In einer besonders bevorzugten Ausführungsform enthalten die erfindungsgemäßen Emulsionskonzentrate
(a) 3 bis 20 Gew.-%, bevorzug 4 bis 15 Gew.-%, besonders bevorzug 8 bis 12 Gew.-% Fluoxastrobin,
(b) 3 bis 25 Gew.-%, bevorzugt 4 bis 20 Gew.-%, besonders bevorzugt 7 bis 15 Gew.-% eines weiteren agrochemischen Wirkstoffs,
(c) 2 bis 45 Gew.-%, bevorzugt 3 bis 40 Gew.-%, besonders bevorzugt 4 bis 25. Gew.-% mindestens eines nicht-ionischen Tensids,
(d) 2 bis 25 Gew.-%, bevorzugt 5 bis 20 Gew.-%, besonders bevorzugt 8 bis 16 Gew.-% mindestens eines Penetrationsförderers,
(e) 2 bis 20 Gew.-%, bevorzugt 3 bis 15 Gew.-%, besonders bevorzugt 4 bis 12 Gew.-% mindestens eines Ethylendiaminalkoxylat-Derivats als Emulgator sowie
(f) 5 bis 70 Gew.-%, bevorzugt 10-60Gew.-%, besonders bevorzugt 20-50 Gew.-% an Methyl-5-(dimethylamino)-2-methyl-5-oxopentanoate.

Die erfindungsgemäßen Emulsionskonzentrate können noch weitere Zusätze (g) enthalten. Geeignete Zusätze (g), die gegebenenfalls in den erfindungsgemäßen Formulierungen enthalten sein können, sind Entschäumer (g1), Konservierungsmittel (g2), Antioxidantien (g3) und Farbstoffe (g4).

Als Entschäumer (g1) sind alle Substanzen geeignet, die üblicherweise in Agrochemikalien zu diesem Zweck eingesetzt werden können. Bevorzugt sind Siliconöle, Siliconölzubereitungen Magnesiumstearat, Phosphin- und Phosphonsäuren. Beispiele sind Silcolapse^{®} 482 von Bluestar Silicones, Silfoam^{®} SC1132 von Wacker [Dimethylsiloxane und -silicone, CAS-Nr. 63148-62-9], SAG 1538 oder SAG 1572 von Momentive [Dimethylsiloxane und -silicone, CAS-Nr. 63148-62-9] oder Fluowet^{®} PL 80.

Mögliche Konservierungsmittel (g2) sind alle Substanzen, die üblicherweise in Agrochemikalien zu diesem Zweck eingesetzt werden können. Als Konservierungsmittel eignen sich beispielsweise Zubereitungen mit 5-Chlor-2-methyl-4-isothiazolin-3-on [CIT; CAS-Nr. 26172-55-4], 2-Methyl-4-isothiazolin-3-on [MIT, CAS-Nr. 2682-20-4] oder 1.2-Benzisothiazol-3(2H)-on [BIT, CAS-Nr. 2634-33-5]. Als Beispiele seien Preventol^{®} D7 (Lanxess), Kathon^{®} CG/ICP (Rohm & Haas), Acticide^{®} SPX (Thor GmbH) und Proxel^{®} GXL (Arch Chemicals) genannt.

Als Antioxidantien (g3) sind alle Substanzen geeignet, die üblicherweise in Agrochemikalien zu diesem Zweck eingesetzt werden können. Bevorzugt ist Butylhydroxytoluol [3.5-Di-tert.-butyl-4-hydroxytoluol, CAS-Nr. 128-37-0] und Zitronensäure.

Mögliche Farbstoffe (g4) sind alle Substanzen, die üblicherweise in Agrochemikalien zu diesem Zweck eingesetzt werden können. Als Beispiele seien Titandioxid, Ruß, Zinkoxid, blaue Pigmente, rote Pigmente und Permanent Red FGR genannt.

Die Herstellung der erfindungsgemäßen Formulierungen erfolgt z.B. in der Weise, dass man die Komponenten (a) bis (g) in den jeweils gewünschten Verhältnissen miteinander vermischt. Handelt es sich bei dem agrochemischen Wirkstoff um eine Festsubstanz, so setzt man diesen im Allgemeinen entweder in kristalliner oder amorpher Form oder in Form einer Lösung in einem organischen Solvens ein. Es ist außerdem möglich, einen festen agrochemischen Wirkstoff in Form einer Schmelze einzusetzen.

Die vorliegende Erfindung betrifft auch ein Verfahren zur Herstellung der erfindungsgemäßen flüssigen Formulierungen durch Mischen der Komponenten (a), (b), (c) und (d), (e), (f) und (g) sowie den gegebenenfalls weiteren Additiven.

Die Temperaturen können bei der Durchführung des Verfahrens in einem bestimmten Bereich variiert werden. Man arbeitet im Allgemeinen bei Temperaturen zwischen 0°C und 80°C, vorzugsweise zwischen 10°C und 60°C

Bei der Durchführung des erfindungsgemäßen Verfahrens geht man im Allgemeinen bei der Herstellung eines ECs so vor, dass der Wirkstoff bzw. die Wirkstoffe zunächst im Lösungsmittel gelöst wird bzw. werden. Die weiteren Komponenten werden dann in die entstehende Lösung gerührt. Zur Durchführung des erfindungsgemäßen Verfahrens kommen übliche Geräte in Betracht, die zur Herstellung von agrochemischen Formulierungen eingesetzt werden. Auch hiervon abweichende Vorgehensweisen sind möglich.

Als Applikationsformen können alle, dem Fachmann als gebräuchlich bekannten Verfahren verwendet werden; beispielsweise genannt seien: Spritzen, Tauchen, Nebeln sowie eine Reihe spezieller Verfahren zur direkten unter- oder oberirdischen Behandlung von gesamten Pflanzen oder Teilen (Saatgut, Wurzel, Stolonen, Stängel, Stamm, Blatt), wie beispielsweise Stamminjektion bei Bäumen oder Stängelbandagen bei perennierenden Pflanzen, und eine Reihe spezieller indirekter Applikationsverfahren.

Die jeweilige flächen- und/oder objektbezogene Aufwandmenge der Pflanzenschutzmittel unterschiedlichster Formulierungstypen zur Bekämpfung der genannten Schadorganismen variiert sehr stark. Im Allgemeinen werden hierfür die, dem Fachmann als gebräuchlich für das jeweilige Einsatzgebiet bekannten Applikationsmedien in den gebräuchlichen Mengen eingesetzt; wie beispielsweise von mehreren hundert Liter Wasser pro Hektar bei Standard-Spritzverfahren über wenige Liter Öl pro Hektar bei der 'Ultra Low Volume'-Flugzeugapplikation bis hin zu wenigen Millilitern einer physiologischen Lösungen bei Injektionsverfahren. Die Konzentrationen der erfindungsgemäßen Pflanzenschutzmittel in den entsprechenden Applikationsmedien variieren daher in einem weiten Bereich und sind vom jeweiligen Einsatzgebiet abhängig. Im Allgemeinen werden Konzentrationen verwendet, die dem Fachmann als gebräuchlich für das jeweilige Einsatzgebiet bekannt sind. Bevorzugt sind Konzentrationen von 0,01 Gew.-% bis 99 Gew.-%, bevorzugt von 0,1 Gew.-% bis 90 Gew.-% besonders bevorzugt von 0,2 Gew.-% bis 50 Gew.-%.

Die erfindungsgemäßen agrochemischen Formulierungen können z.B. in den für Flüssigpräparate üblichen Zubereitungsformen entweder als solche oder nach vorherigem Verdünnen mit Wasser ausgebracht werden, also hier insbesondere als Emulsionen oder Lösungen Die Anwendung erfolgt dabei nach üblichen Methoden, also z.B. durch Verspritzen, Gießen oder Injizieren.

In Abhängigkeit von der Art des neben Fluoxastrobin möglicherweise zusätzlich vorliegenden Wirkstoffs sind die erfindungsgemäßen Formulierungen zur Bekämpfung einer großen Zahl von Schädlingen nützlich und können sowohl zur Behandlung von Pflanzenkulturen, aber auch von unbelebter Materie und im Haushalt eingesetzt werden.

Unter "Schädlingen" oder "schädlichen Organismen" werden hier alle Arten von Schädlingen verstanden, die mit organischen Pflanzenschutzwirkstoffen, d.h. Pflanzenschutzmitteln, insbesondere Fungiziden und Mischungen von Fungiziden mit anderen Pflanzenschutzmitteln, bekämpft bzw. unter Kontrolle behalten werden können. Der Begriff Schädling umfasst daher pflanzenschädigende Organismen, insbesondere Schadpilze und deren Sporen, aber auch schädliche Insekten, Arachniden, Nematoden und Schadpflanzen. Der Begriff "Kontrolle" umfasst sowohl die kurative Behandlung, d.h. die Behandlung von befallenen Pflanzen mit einer erfindungsgemäßen Formulierung, als auch die protektive Behandlung, d.h. die Behandlung von Pflanzen zum Schutz vor einem Schädlingsbefall.

Die vorliegende Erfindung betrifft somit auch die Verwendung von hierin beschriebenen Formulierungen zur Bekämpfung von Schädlingen, insbesondere Pflanzenschädlingen; und ein Verfahren zur Bekämpfung von schädlichen Organismen, insbesondere von pflanzenschädigenden Organismen, umfassend das in Kontakt Bringen der schädlichen Organismen, ihres Habitats, ihrer Wirte, wie Pflanzen und Saatgut, sowie des Erdreichs, des Gebiets und der Umgebung in denen sie wachsen oder wachsen könnten, aber auch von Materialien, Pflanzen, Saatgut, Erdreich, Oberflächen oder Räumen, die vor dem Angriff oder dem Befall durch pflanzenschädigende Organismen geschützt werden sollen, mit einer wirksamen Menge der erfindungsgemäßen Formulierungen.

Ein weiterer Gesichtspunkt der Erfindung betrifft die Verwendung der hierin beschriebenen Formulierungen zum Schutz von Pflanzen einschließlich Saatgut, insbesondere um Nutzpflanzen vor dem Befall durch schädliche Organismen, insbesondere Schadpilzen, zu schützen. Die vorliegende Erfindung betrifft somit auch die Verwendung der Formulierungen zur Bekämpfung pflanzenschädlicher Organismen wie beispielsweise Schadpilzen, Insekten, Arachniden, Nematoden und Schadpflanzen, insbesondere zur Bekämpfung von Schadpilzen.

Die Formulierungen der Erfindung können im Pflanzenschutz vor allem als Blatt-, Beiz- und Bodenfungizide in an sich bekannter Weise zur Bekämpfung von pflanzenpathogenen Pilzen eingesetzt werden.

Als Pflanzen, welche mit den erfindungsgemäßen Formulierungen behandelt werden können, seien folgende erwähnt: Baumwolle, Flachs, Weinrebe, Obst, Gemüse, wie *Rosaceae sp.* (beispielsweise Kernfrüchte wie Apfel und Birne, aber auch Steinfrüchte wie Aprikosen, Kirschen, Mandeln und Pfirsiche und Beerenfrüchte wie Erdbeeren), *Ribesioidae sp., Juglandaceae sp., Betulaceae sp., Anacardiaceae sp., Fagaceae sp., Moraceae sp., Oleaceae sp., Actinidaceae sp., Lauraceae sp., Musaceae sp.* (beispielsweise Bananenbäume und -plantagen), *Rubiaceae sp.* (beispielsweise Kaffee), *Theaceae sp., Sterculiceae sp., Rutaceae sp.* (beispielsweise Zitronen, Organen und Grapefruit); *Solanaceae sp.* (beispielsweise Tomaten), *Liliaceae sp., Asteraceae sp.* (beispielsweise Salat), *Umbelliferae sp., Cruciferae sp., Chenopodiaceae sp., Cucurbitaceae sp.* (beispielsweise Gurke), *Alliaceae sp.* (beispielsweise Lauch, Zwiebel), *Papilionaceae sp.* (beispielsweise Erbsen); Hauptnutzpflanzen, wie *Gramineae sp.* (beispielsweise Mais, Rasen, Getreide wie Weizen, Roggen, Reis, Gerste, Hafer, Hirse und Triticale), *Asteraceae sp.* (beispielsweise Sonnenblume), *Brassicaceae sp.* (beispielsweise Weißkohl, Rotkohl, Brokkoli, Blumenkohl, Rosenkohl, Pak Choi, Kohlrabi,

Radieschen sowie Raps, Senf, Meerrettich und Kresse), *Fabacae sp.* (beispielsweise Bohne, Erdnüsse), *Papilionaceae sp.* (beispielsweise Sojabohne), *Solanaceae sp.* (beispielsweise Kartoffeln), *Chenopodiaceae sp.* (beispielsweise Zuckerrübe, Futterrübe, Mangold, Rote Rübe); Zuckerrohr, Mohn, Olive, Kokosnuss, Kakao, Tabak und Nutzpflanzen und Zierpflanzen in Garten und Wald; sowie jeweils genetisch modifizierte Arten dieser Pflanzen, sowie die Samen dieser Pflanzen.

Bevorzugt werden die erfindungsgemäßen Formulierungen zur Behandlung von Weizen, Gerste, Roggen, Soja, Zwiebeln, Mais und Erdnüssen eingesetzt.

Insbesondere lassen sich mit den erfindungsmäßigen Formulierungen des Fluoxastrobins grundsätzlich alle Schadpilzerkrankungen bekämpfen, die auch mit den bekannten Formulierungen des Fluoxastrobins bekämpft werden können. Abhängig von dem jeweiligen, gegebenenfalls vorliegenden Mischungspartner handelt es sich beispielsweise um die folgenden Pflanzenerkrankungen:
*Alternaria* Arten an Gemüse, Raps, Zuckerrüben, Soja, Getreide, Baumwolle, Obst und Reis (z.B. *A. solani* oder *A. alternata* an Kartoffel und anderen Pflanzen), *Aphanomyces* Arten an Zuckerrüben und Gemüse, *Ascochyta sp.* an Baumwolle und Reis, *Bipalaris-* und *Drechslera* Arten an Mais, Getreide, Reis und Rasen (z.B. *teres* an Gerste, *D. tritci-repentis* an Weizen), *Blumeria graminis* (Echter Mehltau) an Getreide, *Botrytis cinerea* (Grauschimmel) an Erdbeeren, Gemüse, Blumen und Weinreben, *Botryodiplodia sp.* an Baumwolle, *Bremia lactucae* an Salat, *Cerospora* Arten an Mais, Sojabohnen, Reis und Zuckerrüben (z.B. *C. beticula* an Zuckerrüben), *Cochliobolus* Arten an Mais, Getreide, Reis (z.B. *Cochliobolus sativus* an Getreide, *Cochliobolus miyabeanus* an Reis), *Corynespora sp.* an Sojabohnen, Baumwolle und anderen Pflanzen, *Colletotrichum* Arten an Sojabohnen, Baumwolle und anderen Pflanzen (z.B. *C. acutatum* an verschiedenen Pflanzen), *Curvularia sp.* an Getreide und Reis, *Diplodia sp.* an Getreide und Reis, *Exserohilum* Arten an Mais, *Erysiphe cichoracearum* und *Sphaerotheca fuliginea* an Gurkengewächsen, *Fusarium* und *Verticillium* Arten (z.B. *V. dahliae*) an verschiedenen Pflanzen (z.B. *F. graminearum* an Weizen), *Gaeumanomyces graminis* an Getreide, *Gibberella* Arten an Getreide und Reis (z.B. *Gibberella fujikuroi* an Reis), *Grainstaining complex* an Reis, *Helminthosporium* Arten (z.B. *H. graminicola*) an Mais und Reis, *Macrophomina sp.* an Soja und Baumwolle, *Michrodochium sp.* (z.B. *M. nivale* an Getreide), *Mycosphaerella* Arten an Getreide, Bananen und Erdnüssen (*M*. *graminicola* an Weizen, *M. fijiesis* an Banane), *Phaeoisaripsis sp.* an Sojabohnen, *Phakopsara sp.* (z.B. *P. pachyrhizi* und *P. meibomiae* an Sojabohnen), *Phoma sp.* an Soja, *Phomopsis* Arten an Sojabohnen, Sonnenblumen und Weinreben (*P. viticola* an Weinreben, *P. helianthii* an Sonnenblumen), *Phytophthora infestans* an Kartoffeln und Tomaten, *Plasmopara viticola* an Weinreben, *Penecilium sp.* an Soja und Baumwolle, *Podosphaera leucotricha* an Apfel, *Pseudocercosporella herpotrichoides* an Getreide, *Pseudoperonospora* Arten an Hopfen und Gurkengewächsen (z.B. *P. cubenis* an Gurke), *Puccinia* Arten an Getreide, Mais und Spargel (P. *triticina* und *P. striformis* an Weizen, *P. asparagi* an Spargel), *Pyrenophora* Arten an Getreide, *Pyricularia oryzae, Corticium sasakii, Sarocladium oryzae, S. attenuatum*, *Entyloma oryzae* an Reis, *Pyricularia grisea* an Rasen und Getreide, *Pythium spp.* an Rasen, Reis, Mais, Baumwolle, Raps, Sonnenblumen, Zuckerrüben, Gemüse und anderen Pflanzen, *Rhizoctonia*-Arten (z.B. *R. solani*) an Baumwolle, Reis, Kartoffeln, Rasen, Mais, Raps, Kartoffeln, Zuckerrüben, Gemüse und anderen Pflanzen, *Rynchosporium sp.* (z.B. *R. secalis*) an Reis und Getreide, *Sclerotinia* Arten (z.B. S. *sclerotiorum*) an Raps, Sonnenblumen und anderen Pflanzen, *Septoria tritici* und *Stagonospora nodorum* an Weizen, *Erysiphe* (syn. *Uncinulanecator*) an Weinrebe, *Setospaeria* Arten an Mais und Rasen, *Sphacelotheca reilinia* an Mais, *Thievaliopsis* Arten an Sojabohnen und Baumwolle, *Tilletia* Arten an Getreide, *Ustilago* Arten an Getreide, Mais und Zuckerrübe, und *Venturia* Arten (Schorf) an Apfel und Birne (z.B. *V. inaequalis* an Apfel).

Die erfindungsgemäßen Formulierungen können unverdünnt oder mit Wasser verdünnt appliziert werden. In der Regel werden sie mit wenigstens einem Teil Wasser, bevorzugt mit 10 Teilen Wasser und besonders bevorzugt mit wenigstens 500 Teilen Wasser, beispielsweise mit 1 bis 10.000, vorzugsweise 10 bis 5.000 und ganz besonders bevorzugt mit 50 bis 400 Teilen Wasser bezüglich eines Teiles der Formulierung verdünnt.

Ebenfalls Gegenstand der vorliegenden Erfindung ist eine Emulsion erhältlich durch Mischen von Wasser mit der erfindungsgemäßen flüssigen Formulierung. Das Mischungsverhältnis von Wasser zu Emulsionskonzentrat kann im Bereich von 1000 zu 1 bis 1 zu 1, bevorzugt 400 zu 1 bis 10 zu 1 betragen.

Die Verdünnung wird erreicht, indem die erfindungsgemäßen Emulsionskonzentrate zu dem Wasser gegossen werden. Zur raschen Vermischung des Konzentrats mit Wasser wird üblicherweise Agitation, wie beispielsweise Rühren, eingesetzt. Allerdings ist eine Agitation in der Regel nicht notwendig. Obwohl die Temperatur für den Verdünnungsvorgang ein unkritischer Faktor ist, werden Verdünnungen üblicherweise bei Temperaturen im Bereich von 0°C bis 50°C, insbesondere bei 10°C bis 30°C oder bei Umgebungstemperatur durchgeführt.

Das zum Verdünnen eingesetzte Wasser ist in der Regel Leitungswasser oder Brunnenwasser. Das Wasser kann aber bereits wasserlösliche oder feindispergierte Verbindungen beinhalten, die im Pflanzenschutz verwendet werden, wie etwa Nährstoffe, Düngemittel oder Pestizide.

Zu der erfindungsgemäßen Emulsion können als Vormischung oder gegebenenfalls erst kurz vor der Verwendung (Tank-Mix) verschiedene Arten von Ölen, Netzmitteln, Adjuvantien, Düngemitteln oder Mikronährstoffen sowie weitere Pestizide (z.B. Herbizide, Insektizide, Fungizide, Wachstumsregulatoren, Safener) hinzugefügt werden. Diese Mittel können den erfindungsgemäßen Formulierungen im Gewichtsverhältnis 1:100 bis 100:1, bevorzugt 1:10 bis 10:1, zugemischt werden.

Der Verwender appliziert die erfindungsgemäße Formulierung üblicherweise aus einem Vordosierungsgerät, einer Rückenspritze, einem Spritztank, einem Spritzflugzeug oder einem Bewässerungssystem. Üblicherweise wird die erfindungsgemäße Formulierung mit Wasser, Puffer und/oder weiteren Hilfsstoffen auf die gewünschte Ausbringungskonzentration verdünnt, wodurch man die gebrauchsfertige Spritzflüssigkeit bzw. agrochemische Zusammensetzung der Erfindung erhält. Üblicherweise werden pro Hektar landwirtschaftlicher Nutzflache im Falle der Spritzapplikation 20 bis 2000 Liter, bevorzugt 50 bis 400 Liter, der gebrauchsfertigen Spritzbrühe ausgebracht.

Die erforderlichen Aufwandmengen der reinen Wirkstoffe ohne Formulierungshilfsstoffe hängen von der Intensität des Schädlingsbefalls, von der Entwicklungsphase der Pflanzen, von den klimatischen Bedingungen des Einsatzortes und dem Applikationsverfahren ab. Im Allgemeinen liegt die Aufwandmenge im Bereich von 0,001 bis 3 kg, bevorzugt von 0,005 bis 2 kg, besonders bevorzugt von 0,01 bis 1 kg und ganz besonders bevorzugt von 25 bis 500 g Wirkstoff pro Hektar, wobei Wirkstoff hier Fluoxastrobin zuzüglich möglicher weiterer Wirkstoffe bedeutet.

Die in der Regel verdünnten Formulierungen der Erfindung werden hauptsächlich durch Besprühen, insbesondere Besprühen der Blätter, appliziert. Die Applikation kann mit dem Fachmann bekannten Sprühtechniken, beispielsweise unter Verwendung von Wasser als Träger und Spritzbrühenmengen von etwa 50 bis 1 000 Litern pro Hektar, beispielsweise von 100 bis 300 Litern pro Hektar, durchgeführt werden.

Die erfindungsgemäßen EC-Formulierungen verfügen über vorteilhafte Eigenschaften für die Behandlung von Pflanzen, insbesondere zeichnen sie sich durch gute Anwendungseigenschaften, hohe Stabilität und hohe fungizide Aktivität aus.

Bezüglich der guten Anwendungseigenschaften sind insbesondere zu nennen, die Ausbildung einer stabilen Emulsion in der Spritzbrühe bei der ausschließlichen Verwendung von wasserlöslichen Lösungsmitteln und die Vermeidung jeglicher bekannten Solvatbildung mit dem Wirkstoffen der erfindungsgemäßen Formulierungen.

Die Erfindung wird durch die Beispiele näher erläutert ohne sie darauf zu beschränken.

### Herstellungsbeispiele

### Versuch 1: Bildung eines Solvates aus Fluoxastrobin und Methyl-5-(dimethylamino)-2-methyl-5-oxopentanoate

Es wurde eine gesättigte Lösung von Fluoxastrobin in Methyl-5-(dimethylamino)-2-methyl-5-oxopentanoate (220 g/l) hergestellt, filtriert, auf -5 °C abgekühlt und anschließend einer starken Scherbeanspruchung ausgesetzt. Anschließend wurde die Mischung weiterhin bei -5°C gelagert. Nach ½ jähriger Lagerung bei -5 °C wurde ein fester Niederschlag beobachtet. Dieser feste Niederschlag wurde chemisch analysiert. Er bestand zu 98,7 % aus Fluoxastrobin. Somit kann gezeigt werden, dass nach heutigem Stand des Wissens kein Solvat aus Fluoxastrobin und Methyl-5-(dimethylamino)-2-methyl-5-oxopentanoate besteht und eine beliebige Mischung beider Komponenten im Löslichkeitsraum der beiden Komponente in einer Pflanzenschutzformulierung eingesetzt werden kann.

### Beispiele 1 bis 8 Herstellung

Zur Herstellung der erfindungsgemäßen Beispiele 1 bis 8 werden die einzelnen Komponenten der Mischung abgewogen und zusammengeführt (siehe Tabelle 3 und Tabelle 4). Das vollständige Lösen der Komponenten in der Mischung wird durch Rühren der zusammengeführten Komponenten unterstützt. Die Herstellung der Mischung ist abgeschlossen, sobald alle Komponenten gelöst vorliegen. Die Herstellung erfolgt unter typischen Umgebungsbedingungen. Die Reihenfolge der Zugabe der einzelnen Komponenten ist nicht entscheidend zur Herstellung der erfindungsgemäßen Muster.

**Tabelle 3: Herstellungsbeispiele 1 bis 5**

| **Beispiel** | | **1** | **2** | **3** | **4** | **5** |
|---|---|---|---|---|---|---|
| Komponenten | CAS | Gew-% | Gew-% | Gew-% | Gew-% | Gew-% |
| Fluoxastrobin | 361377-29-9 | 9,1 | 9,0 | 9,1 | 9,1 | 9,1 |
| Prothioconazole | 178928-70-6 | 9,1 | 9,0 | 9,1 | 9,1 | 9,1 |
| Soprophor^{®} 796/P | 70880-56-7 | 10 | 5 | 10 | 10 | 10 |
| Lucramul^{®} PS16 | 104376-75-2 | 5 | 10 | 8 | 10 | 5 |
| Lucramul^{®} HOT^{®} 5902 | 64366-70-7 | 15 | 10 | 14 | 13 | 15 |
| Synperonic^{®} T/304 | 26316-40-5 | 5 | 10 | 8 | 7 | 5 |
| Rhodiasolv^{®} Polarclean^{®} | 1174627-68-9 | 46,2 | 46,4 | 41,2 | 41,2 | 46,2 |
| SAG1571 | 63148-62-9 | 0,1 | 0,1 | 0,1 | 0,1 | 0,1 |
| Zitronensäure | | 0,5 | 0,5 | 0,5 | 0,5 | 0,5 |

**Tabelle 4: Herstellungsbeispiele 6 bis 8**

| **Beispiel** | | **6** | **7** | **8** |
|---|---|---|---|---|
| Komponeten | CAS | Gew-% | Gew-% | Gew-% |
| Fluoxastrobin | 361377-29-9 | 10 | 5 | 9,1 |
| Prothioconazole | 178928-70-6 | | 10 | |
| Bixafen | 581809-46-3 | 10 | 4 | |
| Soprophor^{®} 796/P | 70880-56-7 | 12 | 12 | 10 |
| Lucramul^{®} PS16 | 104376-75-2 | 4,5 | 4,5 | 5 |
| Lucramul^{®} HOT 5902 | 64366-70-7 | 12 | 12 | 15 |
| Synperonic^{®} T/304 | 26316-40-5 | 8 | 8 | 5 |
| Rhodiasolv^{®} Polarclean^{®} | 1174627-68-9 | 43,5 | 44,5 | 55,4 |
| SAG1571 | 63148-62-9 | | | 0,1 |
| Zitronensäure | | | | 0,5 |

### Versuch 2: Untersuchungen der erfindungsgemäßen Formulierungen auf Bildung von festem Niederschlag in Form eines Solvates aus Fluoxastrobin und Methyl-5-(dimethylamino)-2-methyl-5-oxopentanoate

Eine Mischung bestehend aus Komponenten gemäß Tabelle 3 Beispiel 1 bis 6 wurde gemischt und somit eine erfindungsgemäße EC-Formulierung hergestellt. Anschließend wurden die Untersuchungsmethoden "Kältestabilität" und "Durchflußtest" durchgeführt.

### Kältestabilität:

Die erfindungsgemäße Formulierung wird bei niedrigen Temperaturen für zwei Zeitperioden gelagert und anschließend visuell beobachtet und beschrieben (siehe Tabelle 5). Die Bewertung "Keine Kristalle" besagt, dass sich in der Lösung keine festen Strukturen ausgebildet haben. Somit liegt kein Solvat in der Mischung vor. Die Mischung kann gemäß fachlicher Praxis als Pflanzenschutzmittel angewendet werden.

### Durchflußtest:

Von der erfindungsgemäßen Formulierung wird eine Spritzbrühe (Verdünnung in Wasser in Anwendungskonzentration) hergestellt und für eine definierte Zeitperiode durch ein Sieb gefördert. Dieser Vorgang wird mehrfach wiederholt. Um die unterschiedlichen Anwendungsbedingungen nachzustellen, wird der Test bei verschiedenen Wassertemperaturen durchgeführt (Ergebnisse siehe Tabelle 6). Ein gutes Ergebnis wird erzielt bei mehrstündiger Durchströmung ohne Verblocken des Siebes. Somit liegt kein Solvat in der Spritzbrühe vor. Die Mischung kann gemäß fachlicher Praxis als Pflanzenschutzmittel angewendet werden.

**Tabelle 5: Ergebnisse "Kältestabilität" für die Beispiele 1 bis 5**

| **Beispiel** | **1** | **2** | **3** | **4** | **5** |
|---|---|---|---|---|---|
| **Kältestabilität** | | | | | |
| 1 Woche; -10 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 1 Woche; -5 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 1 Woche; -0 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 1 Woche; +5 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 4 Wochen; -10 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 4 Wochen; -5 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 4 Wochen; -0 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |
| 4 Wochen; +5 °C | Keine Kristalle Nach 1h flüssig | Keine Kristalle Nach 1h flüssig | Keine Kristalle Nach 1h flüssig | Keine Kristalle Nach 1h flüssig | Keine Kristalle Nach 1h flüssig |

**Tabelle 6: Ergebnisse "Durchflusstest" für die Beispiele 1 bis 5 (0,7% in Wasser)**

| **Beispiel** | **1** | **2** | **3** | **4** | **5** |
|---|---|---|---|---|---|
| Durchflusstest | | | | | |
| 5 °C Wassertemperatur | >100 h | >100 h | >100 h | >100 h | >100 h |
| 20 °C Wassertemperatur | >100 h | >100 h | >100 h | >100 h | >100 h |

## Patentansprüche

1. Emulsionskonzentrate enthaltend Fluoxastrobin sowie ein oder mehrere agrochemischer Wirkstoffe, **dadurch gekennzeichnet, dass** diese als Lösungsmittel Verbindungen der Formel (I) 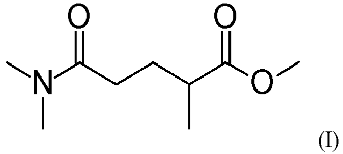 enthalten.

2. Emulsionskonzentrate gemäß Anspruch 1, **dadurch gekennzeichnet, dass** diese mindestens einen Emulgator au der Gruppe der Ethylendiaminalkoxylat-Derivate enthalten.

3. Emulsionskonzentrate gemäß Anspruch 1, **dadurch gekennzeichnet, dass** diese folgende Komponenten enthalten:
(a) Fluoxastrobin,
(b) mindestens ein weiterer agrochemischen Wirkstoff,
(c) mindestens ein nicht-ionisches Tensid,
(d) mindestens ein Penetrationsförderer,
(e) mindestens einen Ethylendiaminalkoxylat-Derivat-Emulgator sowie
(f) Methyl-5-(dimethylamino)-2-methyl-5-oxopentanoate.

4. Emulsionskonzentrate gemäß Anspruch 1, **dadurch gekennzeichnet, dass** diese mindestens 80 g/L an Komponente (a) enthalten.

5. Emulsionskonzentrate gemäß Anspruch 1, **dadurch gekennzeichnet, dass** diese
(a) 3 bis 20 Gew.-%, bevorzug 4 bis 15 Gew.-%, besonders bevorzug 8 bis 12 Gew.-% Fluoxastrobin,
(b) 3 bis 25 Gew.-%, bevorzugt 4 bis 20 Gew.-%, besonders bevorzugt 7 bis 15 Gew.-% eines weiteren agrochemischen Wirkstoffs,
(c) 2 bis 45 Gew.-%, bevorzugt 3 bis 40 Gew.-%, besonders bevorzugt 4 bis 25. Gew.-% mindestens eines nicht-ionischen Tensids,
(d) 2 bis 25 Gew.-%, bevorzugt 5 bis 20 Gew.-%, besonders bevorzugt 8 bis 16 Gew.-% mindestens eines Penetrationsförderers,
(e) 2 bis 20 Gew.-%, bevorzugt 3 bis 15 Gew.-%, besonders bevorzugt 4 bis 12 Gew.-% mindestens eines Ethylendiaminalkoxylat-Derivats als Emulgator sowie
(f) 5 bis 70 Gew.-%, bevorzugt 10-60Gew.-%, besonders bevorzugt 20-50 Gew.-% an Methyl-5-(dimethylamino)-2-methyl-5-oxopentanoate,
enthalten.

6. Emulsionskonzentrate gemäß Anspruch 1, **dadurch gekennzeichnet, dass** diese als Komponente (b) Prothioconazole, Bixafen oder Fluopyram enthalten.

7. Emulsionskonzentrate gemäß Anspruch 1, **dadurch gekennzeichnet, dass** diese als Komponente (b) Prothioconazole enthalten.

8. Verwendung der Emulsionskonzentrate gemäß Anspruch 1 zur Bekämpfung pflanzenschädlicher Organismen wie beispielsweise Schadpilzen, Insekten, Arachniden, Nematoden und Schadpflanzen, insbesondere zur Bekämpfung von Schadpilzen.
